# EUROPÄISCHE PATENTSCHRIFT

(11) **EP 2 362 362 B1**
(45) Veröffentlichungstag und Bekanntmachung des Hinweises auf die Patenterteilung: **17.04.2013**
(21) Anmeldenummer: 10450021.0
(22) Anmeldetag: 18.02.2010
(51) Int. Cl.: G07F 15/00, B60L 11/18, B60L 15/20, G07B 15/00

(54) **Verfahren zum Laden von Elektrofahrzeugen in geographisch verteilten Ladestationen**
Method for charging electric vehicles in geographically distributed charging stations
Procédé de charge de véhicules électriques dans des stations de charge réparties géographiquement

(43) Veröffentlichungstag der Anmeldung: 31.08.2011
(73) Patentinhaber: Kapsch TrafficCom AG, 1120 Wien (AT)
(72) Erfinder: Nagy, Oliver, 1190 Wien (AT); Güner, Refi-Tugrul, 2500 Baden (AT); Toplak, Erwin, 2521 Trumau (AT)
(74) Vertreter: Weiser, Andreas

(56) Entgegenhaltungen:
- EP-A1- 1 944 736
- WO-A1-99/40544
- WO-A1-03/049057
- WO-A2-2006/127185
- US-A- 5 825 007
- US-A1- 2007 090 937
- US-A1- 2009 177 580
- "Method, system, and apparatus for reserving the use of a re-charging station for a Plug-in Hybrid Electric Vehicle" IP.COM JOURNAL, IP.COM INC., WEST HENRIETTA, NY, US, 10. Juni 2009 (2009-06-10), XP013132265 ISSN: 1533-0001
- Maxim Raya, Jean-Pierre Hubaux: "The Security of Vehicular Ad Hoc Networks" Laboratory for computer Communications and Applications, School of Computer and Communication Sciences 2005, Seiten 11-21, XP002589727 Alexandria, Virginia, USA DOI: http://doi.acm.org/10.1145/1102219.1102223 ISBN: 1-59593-227-5 Gefunden im Internet: URL:http://portal.acm.org/ft_gateway.cfm?i d=1102223&type=pdf&coll=GUIDE&dl=GUIDE&CFI D=95397566&CFTOKEN=26388002 [gefunden am 2010-06-30]
- Yee Ming Chen, Bo-Yuan Wang: "Vehicle-based interactive management with multi-agent approach" Department of Industrial Engineering and Management, Yuan Ze University Journal of Industrial Engineering and Management Bd. 2(2), 2009, Seiten 360-386, XP002589728 Taiwan ISSN: 2013-0953 Gefunden im Internet: URL:http://www.jiem.org/index.php/jiem/art icle/view/90/35 [gefunden am 2010-06-30]
- YING-LI TIAN ET AL: "IBM smart surveillance system (S3): event based video surveillance system with an open and extensible framework", MACHINE VISION AND APPLICATIONS, SPRINGER, BERLIN, DE, vol. 19, no. 5-6, 24 June 2008 (2008-06-24), pages 315-327, XP019651737, ISSN: 1432-1769, DOI: 10.1007/S00138-008-0153-Z

## Beschreibung

Die vorliegende Erfindung betrifft ein Verfahren zum Laden eines Elektrofahrzeugs in einer Ladestation eines Netzes geographisch verteilter Ladestationen.

An der Schaffung einer flächendeckenden Infrastruktur von Ladestationen ("Stromtankstellen") für Elektrofahrzeuge wird derzeit in zahlreichen Ländern mit Hochdruck gearbeitet. Da solche Ladestationen im Gegensatz zu herkömmlichen Tankstellen einen längeren Aufenthalt des Fahrzeugs erfordern, wäre es wünschenswert, mittels eines effizienten Ressourcenmanagements zu erreichen, daß Benutzer freie Ladestationen rasch auffinden können, so daß sie keinen unnötigen Verkehr verursachen.

Aus der Literaturstelle "Method, system, and apparatus for reserving the use of a re-charging station for a Plug-in Hybrid Electric Vehicle" IP.COM Journal, IP.COM INC., WEST HENRIETTA, NY, US, 10. Juni 2009 (2009-06-10), XP013132265, ISSN: 15330001 ist ein System zum Zuordnen von ladeanfordernden Elektrofahrzeugen zu verfügbaren Ladestationen unter Vermittlung einer Zentrale bekannt, mit welcher die Fahrzeugladegeräte der Fahrzeuge über ein "off-vehicle network gateway" (ONG) kommunizieren können. Für das ONG werden GPRS-, WiFi- und Near Field-(NFC)-Netzwerke vorgeschlagen. Die Zentrale ordnet eine verfügbare Ladestation zu, und das in die Ladestation eintretende Fahrzeug wird z.B. mittels NFC detektiert, wobei auch eine Zutrittsschranke freigeschaltet werden kann.

Die Erfindung setzt sich zum Ziel, die Betrugssicherheit derartiger Systeme zu erhöhen.

Dieses Ziel wird mit einem Verfahren der einleitend genannten Art erreicht, das die folgenden Schritte aufweist:
a) Kommunizieren der Verfügbarkeit einer Ladestation an eine Zentrale des Netzes,
b) Senden einer Ladeanforderung von einem Straßenmaut-Fahrzeuggerät des Elektrofahrzeugs über die Kommunikationseinrichtungen eines Straßenmautsystems an die Zentrale,
c) zueinander Zuordnen eines ladeanfordernden Fahrzeuggeräts und einer verfügbaren Ladestation in der Zentrale,
d) Benachrichtigen des Fahrzeuggeräts hinsichtlich der zugeordneten Ladestation über die Kommunikationseinrichtungen des Straßenmautsystems und der Ladestation hinsichtlich des zugeordneten Fahrzeuggeräts, und
e) Freischalten der Ladestation, wenn darin das zugeordnete Fahrzeuggerät detektiert wird, zum Laden des Elektrofahrzeugs, wobei vom Fahrzeuggerät fahrzeugspezifische Ladeparameter an die zugeordnete Ladestation gesandt werden, um den Ladevorgang zu steuern, und
wobei der Ladevorgang in der Ladestation überwacht und bei einer Unterbrechnung, Störung oder Abweichung des Ladevorgangs von einem vorgegebenen Verlauf mittels einer Kamera eine Bildaufnahme des Fahrzeugs in der Ladestation gemacht wird.

Dadurch kann die Betrugs- und Manipulationssicherheit des Verfahrens entscheidend erhöht werden. Beispielsweise kann so ein betrügerisches Umstecken des Ladekabels von einem Fahrzeug auf ein anderes mittels Beweisphotos geahndet bzw. automatisch detektiert werden.

Bevorzugt kann dazu auch am Anfang und am Ende des Ladevorgangs mittels der Kamera eine Bildaufnahme des Fahrzeugs in der Ladestation gemacht werden.

Die Erfindung schlägt erstmals vor, die bestehende Infrastruktur von drahtlosen Straßenmautsystemen zum Ressourcenmanagement von Ladestationen für Elektrofahrzeuge einzusetzen. Mit Hilfe der drahtlosen Fahrzeuggeräte (Onboard-Units, OBUs) der Straßenmautsysteme können Ladeanforderungen bereits während der Fahrt, noch fernab vom Ziel, über die Kommunikationseinrichtungen des Straßenmautsystems abgesetzt und Verfügbarkeitsbenachrichtigungen rechtzeitig empfangen werden, um den Weg zu einer freien Ladestation vorausschauend planen zu können. Gleichzeitig können die drahtlosen OBUs dazu verwendet werden, das Fahrzeug bei seinem Eintreffen in der Ladestation zu detektieren und diese automatisch freizuschalten. Das Verfahren der Erfindung benötigt dazu benutzerseitig keine über die vorhandenen Straßenmaut-OBUs hinausgehende Infrastruktur und auch betreiberseitig nur eine Zentrale, welche die Zuordnung zwischen den Ladeanforderungen und Ladestationen vornimmt, sowie einige weitere Kommunikationseinrichtungen in den Ladestationen.

Bevorzugt werden für das Verfahren der Erfindung bestehende DSRC- (Dedicated Short Range Communication) oder WAVE- (Wireless Access in a Vehicle Environment) -Straßenmautsysteme verwendet, und die genannten Kommunikationseinrichtungen sind demgemäß bevorzugt DSRC- oder WAVE-Funkbaken eines solchen Straßenmautsystems.

Gemäß einer besonders vorteilhaften Ausführungsform der Erfindung erfolgt die Kommunikation des Fahrzeuggeräts mit den DSRC- oder WAVE-Funkbaken auch über Vermittlung von Fahrzeuggeräten anderer Fahrzeuge, welche mit dem genannten Fahrzeuggerät ein Fahrzeug-Ad-hoc-Netzwerk "Vehicular Ad-hoc Network" (VANET) bilden. Dies ermöglicht eine bedeutende Erweiterung des vorgestellten Verfahrens: Drahtlose Ad-hoc-Netzwerke, d.h. Netzwerke, die sich aus einer Gruppe sich spontan zusammenfindender Teilnehmer (Netzknoten) bilden und durch Bewegung und Wechsel von Netzknoten in der Regel hochdynamisch sind, sind ein junges Forschungsgebiet, das zunehmend Anwendung und Verbreitung findet. Die Erfindung zieht erstmals in Betracht, VANETs als Relay-Netzwerke für ein OBU-basiertes Ladestations-Management einzusetzen, wodurch die Kommunikationsreichweite über das direkte Einzugsgebiet der Funkbaken des Straßenmautsystems hinaus von Fahrzeug zu Fahrzeug ausgedehnt werden kann.

Das Detektieren eines Fahrzeuggeräts in der zugeordneten Ladestation, um diese freizuschalten, kann auf verschiedene Arten durchgeführt werden. Gemäß einer ersten Ausführungsform der Erfindung wird das Fahrzeuggerät in der Ladestation detektiert, indem es in eine beschränkte Kommunikationszone der Ladestation eintritt. Dies ist besonders einfach realisierbar, erfordert jedoch einen entsprechenden Sendeempfänger für jede Ladestation. Alternativ kann das Fahrzeuggerät in der Ladestation detektiert werden, indem es von einem Sendeempfänger der Ladestation funklokalisiert wird. Letzteres bedeutet etwas höheren apparativen Aufwand für die Funklokalisation, z.B. durch Triangulationsverfahren oder Satellitennavigations-Positionsmeldungen der OBUs, anderseits kann aber ein Sendeempfänger mehrere Ladestationen abdecken.

Bevorzugt verwendet das Fahrzeuggerät zum Senden der Ladeanforderung und Empfangen der Zuordnungs-Benachrichtigung einen omnidirektionalen Sende- und Empfangsmodus und zu seiner Detektion in der Ladestation einen unidirektionalen Sende- und Empfangsmodus. Dies vergrößert einerseits den Sendeempfangsbereich im Straßenmautsystem bzw. VANET und erleichtert anderseits die Detektion der OBU in der Ladestation in einer begrenzten Kommunikationszone.

Besonders günstig ist es, wenn gemäß einem weiteren Merkmal der Erfindung Verrechnungsparameter an die Zentrale oder die zugeordnete Ladestation, um den Ladevorgang zu vergebühren.

Fahrzeugspezifische Parameter können z.B. elektrische Ladeparameter wie Ladestrom, Ladespannung, Ladekennlinie usw. sein oder auf solche in einer Zentrale hinterlegte Parameter verweisen.

Gemäß einem weiteren Merkmal der Erfindung können die Fahrzeuggeräte bereits in der Umgebung einer Ladestation detektiert werden, um eine Zutrittsschranke zur Ladestation, z.B. einen Parkplatzabsperrschranken oder ein Parkhaustor usw. freizuschalten.

Bevorzugt kann in einem weiteren Schritt das Verfahrens auch eine Kurzmitteilung (SMS) betreffend den Ladevorgang, z.B. seinen erfolgreichen Abschluß oder eine durchgeführte Abrechnung, über ein Mobilfunknetz an ein Mobiltelefon des Fahrzeuglenkers gesandt werden.

Die Erfindung wird nachstehend anhand von Ausführungsbeispielen unter Bezugnahme auf die begleitenden Zeichnungen näher beschrieben, in denen zeigen:
Fig. 1 ein Fahrzeug-Ad-hoc-Netzwerk und eine Gruppe beispielhafter Ladestationen zur Durchführung des erfindungsgemäßen Verfahrens in einem schematischen Blockschaltbild;
die Fig. 2 und 3 zwei verschiedene Ausführungsformen von Ladestationen in schematischen Perspektivansichten; und

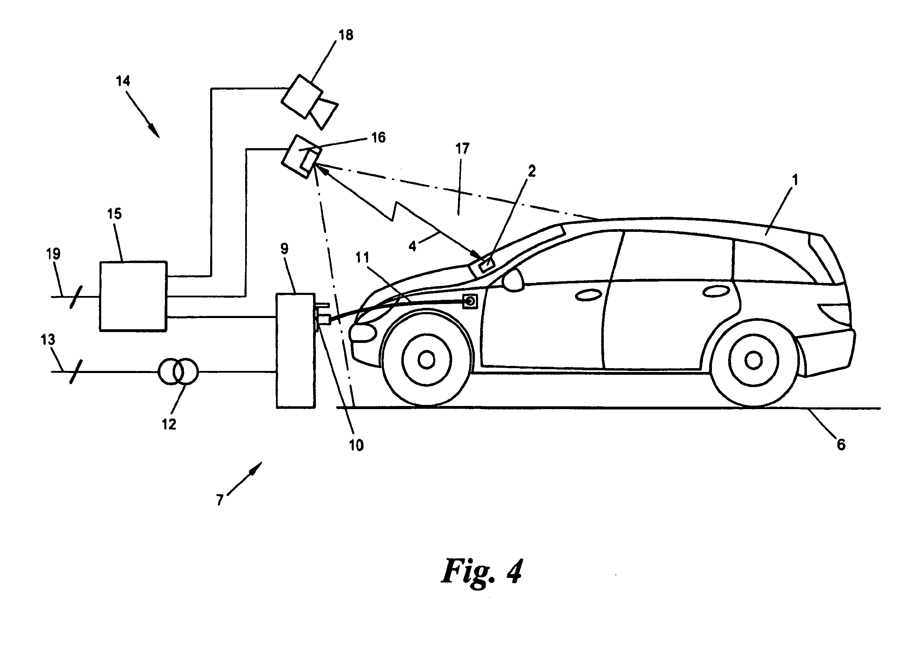

Fig. 4 eine der Ladestationen von Fig. 2 in einer blockschaltbildlichen Seitenansicht im Detail.

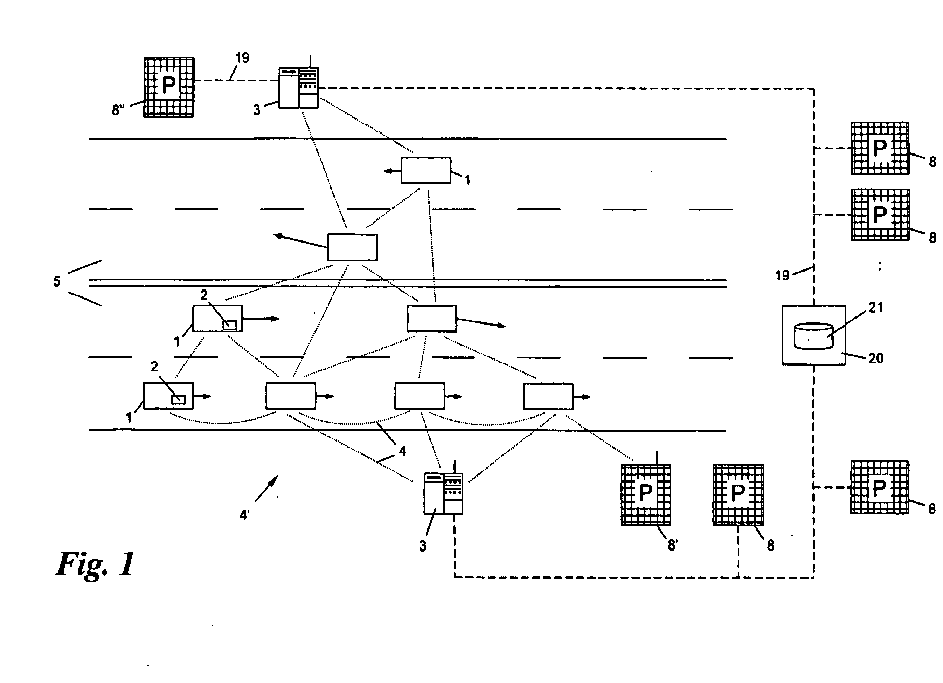

In Fig. 1 ist eine Vielzahl von Elektrofahrzeugen 1 dargestellt, welche jeweils mit Fahrzeuggeräten bzw. OBUs (Onboard-Units) 2 zur Kommunikation mit Funkbaken 3 eines Straßenmautsystems ausgestattet sind. Die OBUs 2 stehen mit den Funkbaken 3 über Drahtlosverbindungen 4 in Kommunikationsverbindung. Die Drahtlosverbindungen 4 können von jeder in der Technik bekannten Art sein, beispielsweise DSRC- (Dedicated Short Range Communication) oder WLAN-Verbindungen, insbesondere nach dem WAVE-Standard (Wireless Access in a Vehicle Environment). Demgemäß sind die Funkbaken 3 entsprechende DSRC-, WLAN- oder WAVE-Funkbaken.

Unter "Elektrofahrzeugen" werden in der vorliegenden Beschreibung beliebige Arten von Fahrzeugen 1 verstanden, welche zumindest teilweise elektrischen Strom zum Aufladen benötigen, beispielsweise auch Hybridfahrzeuge mit gemischten Elektro- und Verbrennungsantrieben.

Mit Hilfe der OBUs 2 und Funkbaken 3 können Ortsnutzungen der Fahrzeuge 1 ermittelt und entsprechend vergebührt werden, z.B. in Form von Straßenmaut für die Benutzung eines Straßennetzes 5, Gebietsmaut für die Benützung oder das Verweilen in einem bestimmten Gebiet, z.B. als Citymaut, oder Parkgebühren für das Verweilen auf Parkplätzen, wie den Stellplätzen 6 der später noch näher erläuterten Ladestationen 7. Die OBUs 2 können dazu sowohl von selbstlokalisierendem Typ sein, z.B. durch autarke Positionsbestimmung in einem Satellitennavigationsnetz, als auch extern von den Funkbaken 3 funklokalisiert werden.

Die OBUs 2 können nicht nur mit den Funkbaken 3 sondern auch untereinander über die Drahtlosverbindungen 4 kommunizieren, sodaß sie gleichzeitig Netzknoten ("nodes") eines Ad-hoc-Netzwerks 4' (VANET) bilden. Kommunikationen der OBUs 2 mit den Funkbaken 3 können daher nicht nur direkt sondern auch über Vermittlung von einer OBU 2 zur nächsten im Rahmen des VANETs 4' erfolgen.

Zum Laden der Elektrofahrzeuge 1 dient ein Netz geographisch verteilter Ladestationen 7, von denen jeweils einige zu örtlichen Gruppen 8 zusammengefaßt sein können, beispielsweise in Form von Parkplätzen oder Parkhäusern. Jede Ladestation 7 umfaßt einen Park- bzw. Stellplatz 6 zum Abstellen eines Fahrzeugs 1 sowie ein dem Stellplatz 6 zugeordnetes Ladegerät 9 zum Laden des Fahrzeugs. Das Ladegerät 9 ist herkömmlicher Art und besitzt beispielsweise eine Anschlußdose 10 für ein Ladekabel 11 zur Zufuhr von Ladestrom vom Fahrzeug 1. Das Ladegerät 9 wird über ein lokales Stromnetz 12 von einem öffentlichen Energieversorgungsnetz 13 stromgespeist.

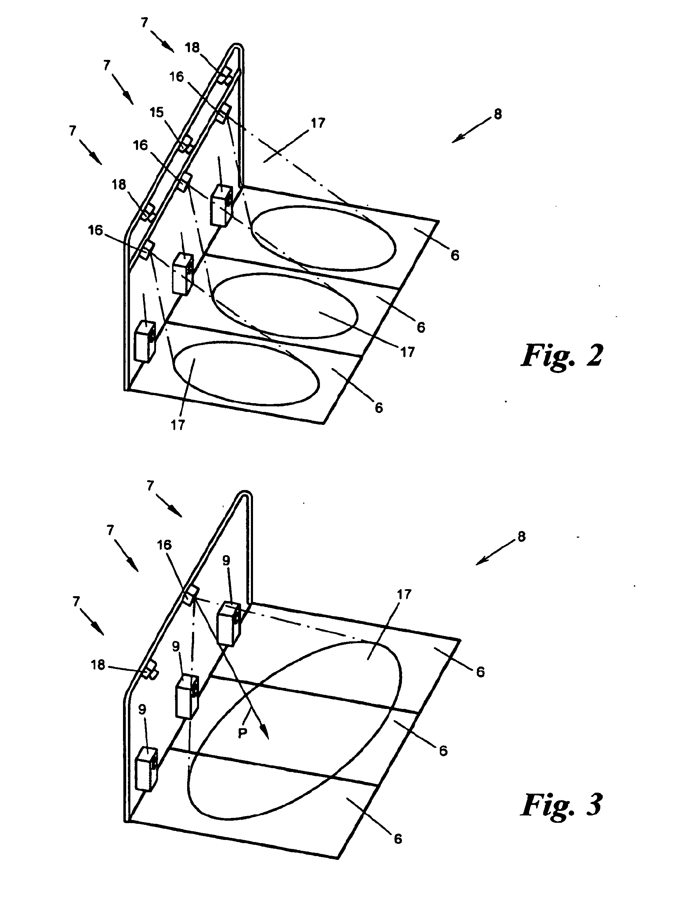

Das Ladegerät 9 wird von einem Sendeempfänger 14 gesteuert, der ein Elektronikmodul 15 und eine daran angeschlossene Sendeempfangsantenne 16 aufweist. Die Sendeempfangsantenne 16 besitzt eine gerichtete Kommunikationszone 17, welche auf den Bereich des Stellplatzes 6 der jeweiligen Ladestation 7 beschränkt ist (Fig. 2); alternativ kann für mehrere Ladestationen 7 ein einziger Sendeempfänger 14 mit einer größeren Kommunikationszone 17 vorgesehen werden, die mehrere Stellplätze 6 abdeckt (Fig. 3). In letzterem Fall ist der Sendeempfänger 14 z.B. durch entsprechende Ausbildung seiner Sendeempfangsantenne 16 dafür ausgebildet, den Ort P einer OBU 2 in der Kommunikationszone 17 zu lokalisieren.

An das Elektronikmodul 15 ist eine auf den Stellplatz 6 gerichtete Kamera 18 angeschlossen. Das Ladegerät 9 überwacht den Ladevorgang und veranlaßt bei jeder Unterbrechung, Störung und/oder Abweichung des Ladevorgangs von einem vorgegebenen Verlauf, z.B. einem vorgegebenen Ladestrom- oder Ladespannungsbereich oder einer vorgegebenen Ladekennlinie, über das Elektronikmodul 15 eine Bildaufnahme des Fahrzeugs 1 durch die Kamera 18. Optional kann auch am Beginn und am Ende eines jeden Ladevorgangs eine Bildaufnahme der Kamera 18 für Beweiszwecke durchgeführt werden.

Zurückkehrend auf Fig. 1 stehen die Ladestationen 7 bzw. Gruppen 8 von Ladestationen 7 über ein Datennetz 19 mit einer Zentrale 20 in Verbindung, welche gleichzeitig die Zentrale des Straßenmautsystems sein kann. Das Datennetz 19 kann dasselbe Datennetz sein, über das die Zentrale 20 mit den Funkbaken 3 kommuniziert, oder ein anderes Datennetz. Optional können die Ladestationen 7 bzw. Gruppen 8 über die Drahtlosverbindungen 4 sowohl direkt als auch über das VANET 4' mit den Funkbaken 3 und über diese mit der Zentrale 20 in Verbindung stehen, siehe die Gruppe 8' in Fig. 1. Auch ist es möglich, daß Ladestationen 7 bzw. Gruppen 8 direkt an eine Funkbake 3 angebunden sind, siehe die Gruppe 8" in Fig. 1.

Das Laden der Elektrofahrzeuge 1 in den Ladestationen 7 gestaltet sich wie folgt.

Jede Ladestation 7 kommuniziert ihre Verfügbarkeit, d.h. ob sie frei ist oder belegt, über das Datennetz 19 und/oder das VANET 4' und/oder die Funkbaken 3 an die Zentrale 20. Diese Kommunikation kann fortlaufend, periodisch oder auch nur im Anlaßfall, d.h. bei Freiwerden bzw. bei Belegung, erfolgen. In einer Datenbank 21 trägt die Zentrale 20 die jeweils aktuell verfügbaren Ladestationen 7 ein.

In einem Fahrzeug 1 kann der Benutzer nun mittels des OBU 2 eine Ladeanforderung über die Drahtlosverbindungen 4 an die Kommunikationseinrichtungen des Straßenmautsystems, hier das VANET 4', die Funkbaken 3 und das Datennetz 19, an die Zentrale 20 senden.

Die Ladeanforderungen können jeweils weitere Daten wie ein gewünschtes geographisches Gebiet (Ziel), in dem die angeforderte Ladestation liegen soll, fahrzeugspezifische technische Ladeparameter wie eine bestimmte Stromaufnahme, Spannung, Ladekennlinie usw., und/oder Verrechnungsparameter enthalten, wie die Angabe eines abbuchbaren Abrechnungskontos in der Zentrale, die Angabe eines Kontostandes einer elektronischen Geldbörse in der OBU 2 usw.

In der Zentrale 20 werden die einlangenden Ladeanforderungen gegen die in der Datenbank 21 als verfügbar eingetragenen Ladestationen 7 geprüft ("match"), um eine in der Nähe des Fahrzeugs 1 oder im gewünschten Zielgebiet freie und den technischen Anforderungen entsprechende Ladestation 7 zu finden. Die aufgefundene Ladestation 7 wird der ladeanfordernden OBU 2 zugeordnet, und die Zuordnung wird in die Datenbank 21 eingetragen. Gleichzeitig wird die OBU 2 hinsichtlich der zugeordneten Ladestation 7 über die Kommunikationseinrichtungen des Straßenmautsystems, d.h. das Datennetz 19, die Funkbaken 3, das VANET 4' und/oder die Drahtlosverbindungen 4 benachrichtigt, sowie die Ladestation 7 hinsichtlich der zugeordneten OBU 2.

Das Fahrzeug 1 setzt seinen Weg zu der ihm bekanntgegebenen Ladestation 7 fort. Sobald in einer Ladestation 7 das Eintreffen des "richtigen" Fahrzeugs 1, d.h. mit der zugeordneten OBU 2, detektiert wird, wird das Ladegerät 9 der Ladestation 7 durch das Elektronikmodul 15 freigeschaltet. Das Detektieren der OBU 2 in der Ladestation 7 wird dabei entweder durch Eintreffen der OBU 2 in der beschränkten Kommunikationszone 17 der Ladestation 7 oder durch Lokalisieren (Pfeil P) der zugeordneten OBU 2 im Bereich des richtigen Stellplatzes 6 der Ladestation 7 durchgeführt.

Über die Drahtlosverbindung 4 zwischen OBU 2 und Sendeempfänger 14 können auch fahrzeugspezifische Ladeparameter, wie gewünschter Ladestrom, Ladespannung, Ladekennlinie usw., der Ladestation 7 mitgeteilt werden, soferne dies nicht bereits zuvor im Zuge der Ladeanforderung gemacht wurde. In gleicher Weise können auch Verrechnungsparameter zwischen der OBU 2 und der Ladestation 7 bzw. der Zentrale 20 ausgetauscht werden.

Das Ladegerät 9 überwacht den Ladevorgang auf jedwede Unterbrechung, Störung oder Abweichung von einem vorgegebenen Verlauf, z.B. einer vorgegebenen Ladekennlinie, und veranlaßt in einem solchen Fall über das Elektronikmodul 15 eine Bildaufnahme durch die Kamera 18. Optional kann auch am Beginn und am Ende eines jeden Ladevorgangs eine Bildaufnahme der Kamera 18 für Beweiszwecke durchgeführt werden. Die Bildaufnahmen der Kamera 18 können zusammen mit weiteren Daten der Ladestation 7 über das Datennetz 19 an die Zentrale gesandt werden. Wie in Fig. 3 gezeigt, können sich auch mehrere Ladestationen 7 eine gemeinsame Kamera 18 teilen.

Die OBU 2 eines Fahrzeugs 1 kann auch bereits in der Umgebung der Ladestation 7 detektiert werden, z.B. durch benachbarte Funkbaken 3 oder eine entsprechend vergrößerte Kommunikationszone 17, um beispielsweise einen Zutrittsschranken (nicht gezeigt) für die Einfahrt in die Ladestation 7 oder eine Gruppe 8 von Ladestationen 7, z.B. ein Parkhaus, freizuschalten.

Die Ladestation 7 und/oder die Zentrale 20 kann auch mit einem Mobilfunknetz in Verbindung stehen, um eine Kurznachricht (SMS) über den Ladevorgang, z.B. den Abschluß oder der Vergebührung, an ein Mobiltelefon des Fahrzeugbesitzers abzusetzen.

In einer optionalen Ausführungsform können die OBUs 2, die Funkbaken 3 und/oder die Sendeempfänger 14 zwischen einem omnidirektionalen und einem gerichteten (unidirektionalen) Sende- und Empfangsmodus umgeschaltet werden, insbesondere je nach Phase des geschilderten Verfahrens: Für das Senden der Ladeanforderungen von den OBUs 2 und Empfangen der Zuordnungs-Benachrichtigungen von der Zentrale 20 sowie die Vermittlungskommunikation im Rahmen des VANETs 4' über die Drahtlosverbindungen 4 werden die OBUs 2 bevorzugt in einem omnidirektionalen Modus betrieben; und für ihre Detektion in einer Ladestation 7 im Rahmen einer beschränkten Kommunikationszone 17 bevorzugt im unidirektionalen Modus. In gleicher Weise können die Funkbaken 3 bzw. Sendeempfänger 14, wenn sie beispielsweise fahrzeugspezifische Ladeparameter oder benutzerspezifische Verrechnungsparameter von den OBUs 2 erhalten oder zum Freischalten von Zutrittsschranken eingesetzt werden, omnidirektional kommunizieren, wogegen sie zur Lokalisierung von OBUs 2 in einer Ladestation 7 bevorzugt unidirektional arbeiten.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Verfahren zum Laden eines Elektrofahrzeugs (1) in einer Ladestation (7) eines Netzes geographisch verteilter Ladestationen, mit den Schritten:
a) Kommunizieren der Verfügbarkeit einer Ladestation (7) an eine Zentrale (20) des Netzes,
b) Senden einer Ladeanforderung von einem Straßenmaut-Fahrzeuggerät (2) des Elektrofahrzeugs (1) über die Kommunikationseinrichtungen (3, 4, 4', 19) eines Straßenmautsystems an die Zentrale (20),
c) zueinander Zuordnen eines ladeanfordernden Fahrzeuggeräts (2) und einer verfügbaren Ladestation (7) in der Zentrale (20),
d) Benachrichtigen des Fahrzeuggeräts hinsichtlich der zugeordneten Ladestation (7) über die Kommunikationseinrichtungen (3, 4, 4', 19) des Straßenmautsystems und der Ladestation (7) hinsichtlich des zugeordneten Fahrzeuggeräts, (2) und
e) Freischalten der Ladestation (7), wenn darin das zugeordnete Fahrzeuggerät (2) detektiert wird, zum Laden des Elektrofahrzeugs (1),
wobei vom Fahrzeuggerät (2) fahrzeugspezifische Ladeparameter an die zugeordnete Ladestation (7) gesandt werden, um den Ladevorgang zu steuern, und
wobei der Ladevorgang in der Ladestation (7) überwacht und bei einer Unterbrechung, Störung oder Abweichung des Ladevorgangs von einem vorgegebenen Verlauf mittels einer Kamera (18) eine Bildaufnahme des Fahrzeugs (1) in der Ladestation (7) gemacht wird.

2. Verfahren nach Anspruch 1, **dadurch gekennzeichnet, dass** am Anfang und am Ende des Ladevorgangs mittels der Kamera (18) eine Bildaufnahme des Fahrzeugs (1) in der Ladestation gemacht wird.

3. Verfahren nach Anspruch 1 oder 2, **dadurch gekennzeichnet, daß** als Kommunikationseinrichtungen DSRC- oder WAVE-Funkbaken (3) eines DSRC- oder WAVE-Straßenmautsystems verwendet werden.

4. Verfahren nach einem der Ansprüche 1 bis 3, **dadurch gekennzeichnet, daß** die Kommunikation des Fahrzeuggeräts (2) mit den DSRC- oder WAVE-Funkbaken (3) auch über Vermittlung von Fahrzeuggeräten (2) anderer Fahrzeuge (1) erfolgt, welche mit dem genannten Fahrzeuggerät (2) ein Fahrzeug-Ad-hoc-Netzwerk (4') bilden.

5. Verfahren nach einem der Ansprüche 1 bis 4, **dadurch gekennzeichnet, daß** das Fahrzeuggerät (2) in der Ladestation (7) detektiert wird, indem es in eine beschränkte Kommunikationszone (17) der Ladestation (7) eintritt.

6. Verfahren nach einem der Ansprüche 1 bis 4, **dadurch gekennzeichnet, daß** das Fahrzeuggerät (2) in der Ladestation (7) detektiert wird, indem es von einem Sendeempfänger (16) der Ladestation (7) funklokalisiert wird.

7. Verfahren nach einem der Ansprüche 1 bis 6, **dadurch gekennzeichnet, daß** das Fahrzeuggerät (2) zum Senden der Ladeanforderung und Empfangen der Zuordnungs-Benachrichtigung einen omnidirektionalen Sende- und Empfangsmodus und zu seiner Detektion in der Ladestation (7) einen unidirektionalen Sende- und Empfangsmodus verwendet.

8. Verfahren nach einem der Ansprüche 1 bis 7, **dadurch gekennzeichnet, daß** vom Fahrzeuggerät (2) Verrechnungsparameter an die Zentrale (20) oder die zugeordnete Ladestation (7) gesandt werden, um den Ladevorgang zu vergebühren.

9. Verfahren nach einem der Ansprüche 1 bis 8, **gekennzeichnet durch** den zusätzlichen Schritt des Freischaltens einer Zutrittsschranke zur Ladestation (7), wenn das der Ladestation (7) zugeordnete Fahrzeuggerät (2) in der Umgebung der Ladestation detektiert wird.

10. Verfahren nach einem der Ansprüche 1 bis 9, **gekennzeichnet durch** den weiteren Schritt des Versendens einer Kurzmitteilung betreffend den Ladevorgang über ein Mobilfunknetz.

## Claims

1. Process for recharging an electric vehicle (1) in a recharging station (7) of a network of geographically distributed recharging stations, with the steps:
a) communicating the availability of a recharging station (7) to a control centre (20) of the network,
b) transmitting a recharge request from a road toll onboard unit (2) of the electric vehicle (1) via communication devices (3, 4, 4', 19) of a road toll system to the control centre (20),
c) assigning an onboard unit (2) requesting recharging and an available recharging station (7) to one another in the control centre (20),
d) notifying the onboard unit of the assigned recharging station (7) via the communication devices (3, 4, 4', 19) of the road toll system and notifying the recharging station (7) of the assigned onboard unit (2) and
e) activating the recharging station (7) to recharge the electric vehicle (1) when the assigned onboard unit (2) is detected therein,
wherein vehicle-specific recharging parameters are transmitted from the onboard unit (2) to the assigned recharging station (7) to control the recharging process, and wherein the recharging process in the recharging station (7) is monitored and an image of the vehicle (1) is recorded in the recharging station (7) by means of a camera (18) in the event of an interruption, interference or deviation in the recharging process from a given course.

2. Process according to claim 1, **characterised in that** an image of the vehicle (1) is recorded in the recharging station by means of the camera (18) at the beginning and at the end of the recharging process.

3. Process according to claim 1 or 2, **characterised in that** DSRC or WAVE radio beacons (3) of a DSRC or WAVE road toll system are used as communication devices.

4. Process according to one of claims 1 to 3, **characterised in that** the communication of the onboard unit (2) with the DSRC or WAVE radio beacons (3) also occurs by mediation through onboard units (2) of other vehicles (1), which form a vehicular ad-hoc network (4') with the said onboard unit (2).

5. Process according to one of claims 1 to 4, **characterised in that** the onboard unit (2) is detected in the recharging station (7) as a result of it entering a restricted communication zone (17) of the recharging station (7).

6. Process according to one of claims 1 to 4, **characterised in that** the onboard unit (2) is detected in the recharging station (7) as a result of it being radio-located by a transceiver (16) of the recharging station (7).

7. Process according to one of claims 1 to 6, **characterised in that** the onboard unit (2) uses an omnidirectional transmit and receive mode for transmitting the recharge request and receiving the assignment notification and a unidirectional transmit and receive mode for its detection in the recharging station (7).

8. Process according to one of claims 1 to 7, **characterised in that** payment calculation parameters are transmitted from the onboard unit (2) to the control centre (20) or the assigned recharging station (7) for invoicing the recharging process.

9. Process according to one of claims 1 to 8, **characterised by** the additional step of clearing an entrance barrier to the recharging station (7) when the onboard unit (2) assigned to the recharging station (7) is detected in the vicinity of the recharging station.

10. Process according to one of claims 1 to 9, **characterised by** the further step of sending a short message concerning the recharging process via a mobile radio network.

## Revendications

1. Procédé de charge d'un véhicule électrique (1) dans un poste de charge (7) d'un réseau de postes de charge répartis géographiquement, comportant les étapes:
a) communiquer la disponibilité d'un poste de charge (7) à une centrale (20) du réseau,
b) envoyer une exigence de charge d'un appareil de véhicule (2) de péage routier du véhicule électrique (1) via les dispositifs de communication (3, 4, 4', 19) d'un système de péage routier à la centrale (20),
c) associer l'un à l'autre un appareil de véhicule (2) exigeant la charge et un poste de charge disponible (7) dans la centrale (20),
d) informer l'appareil de véhicule en ce qui concerne le poste de charge (7) associé via les dispositifs de communication (3, 4, 4', 19) du système de péage routier et du poste de charge (7) en ce qui concerne l'appareil de véhicule associé (2) et
e) déverrouiller le poste de charge (7) si l'appareil de véhicule associé (2) est détecté dedans pour la charge du véhicule électrique (1),
des paramètres de charge spécifiques au véhicule étant envoyés par l'appareil de véhicule (2) au poste de charge (7) associé afin de commander le processus de charge, et
le processus de charge étant surveillé dans le poste de charge (7), et lors d'une interruption, d'une panne ou d'un écart du processus de charge par rapport à un déroulement prescrit, une image du véhicule (1) dans le poste de charge (7) étant prise à l'aide d'une caméra (18).

2. Procédé selon la revendication 1, **caractérisé en ce qu'**une image du véhicule (1) dans le poste de charge est prise au début et à la fin du processus de charge à l'aide de la caméra (18).

3. Procédé selon la revendication 1 ou 2, **caractérisé en ce que** des radiobalises DSRC ou WAVE (3) d'un système de péage routier DSRC ou WAVE sont utilisées comme dispositifs de communication.

4. Procédé selon l'une quelconque des revendications 1 à 3, **caractérisé en ce que** la communication de l'appareil de véhicule (2) avec les radiobalises DSRC ou WAVE (3) est aussi réalisée par transmission d'appareils (2) d'autres véhicules (1) qui forment avec l'appareil de véhicule (2) cité un réseau ad hoc de véhicule (4').

5. Procédé selon l'une quelconque des revendications 1 à 4, **caractérisé en ce que** l'appareil de véhicule (2) est détecté dans le poste de charge (7) lors de son entrée dans une zone de communication limitée (17) du poste de charge (7).

6. Procédé selon l'une quelconque des revendications 1 à 4, **caractérisé en ce que** l'appareil de véhicule (2) est détecté dans le poste de charge (7) en le localisant par radio par un émetteur-récepteur (16) du poste de charge (7).

7. Procédé selon l'une quelconque des revendications 1 à 6, **caractérisé en ce que** l'appareil de véhicule (2) utilise pour l'émission d'exigence de charge et la réception de l'information d'association, un mode d'émission et réception omnidirectionnel et pour sa détection dans le poste de charge (7), un mode d'émission et réception unidirectionnel.

8. Procédé selon l'une quelconque des revendications 1 à 7, **caractérisé en ce que** des paramètres de facturation sont envoyés à la centrale (20) ou au poste de charge associé (7) par l'appareil de véhicule (2) afin de facturer le processus de charge.

9. Procédé selon l'une quelconque des revendications 1 à 8, **caractérisé par** l'étape supplémentaire de déverrouillage d'une barrière d'accès au poste de charge (7) lorsque l'appareil de véhicule (2) associé au poste de charge (7) est détecté dans l'environnement du poste de charge.

10. Procédé selon l'une quelconque des revendications 1 à 9, **caractérisé par** l'autre étape d'émission d'un bref message concernant le processus de charge par un réseau de téléphonie mobile.
